# EUROPEAN PATENT APPLICATION

(11) **EP 4 659 868 A1**
(43) Date of publication of application: **10.12.2025**
(21) Application number: 25174290.4
(22) Date of filing: 05.05.2025
(51) Int. Cl.: B05B 13/04, B05B 15/50, B25J 11/00, B41J 3/407, B05B 1/08, B05B 15/58

(54) **PAINTING ROBOT**

(30) Priority: 06.06.2024 JP 2024092452
(71) Applicant: ABB SCHWEIZ AG, 5400 Baden (CH)
(72) Inventor: IIDA, Kisumi, Tokyo, 1416022 (JP)
(74) Representative: Zimmermann & Partner Patentanwälte mbB

(57) **Abstract**

[Problem] To provide a painting robot capable of improving painting productivity while also improving painting quality.

[Solution] A painting robot (1) paints a painting area of a vehicle body (FR), and comprises: a painting head (30) having a plurality of nozzles (32) for ejecting drops of paint supplied from an external supply path via an internal flow path (35); a robot arm (10) which has the painting head (30) mounted on a tip end thereof and causes the painting head (30) to move to a desired position; and an arm control unit (42) for controlling operation of the robot arm (10), the arm control unit (42) controlling operation of the robot arm (10) so that supply vibration for supplying the paint to the internal flow path (35) is applied to the painting head (30) before the painting area is painted.

## Description

### [Technical Field]

The present invention relates to a painting robot.

### [Background Art]

When a painting head is not filled with sufficient paint, there is sometimes a lack of paint inside the painting head, which means that the amount of paint ejected from nozzles is insufficient, and there may be a reduction in painting quality, such as painting gaps and blurring. Patent Document 1 then indicates that, in order to limit vibration of a painting head such as a print head, which would lead to a reduction in painting quality, a speed of movement of the painting head is reduced before the start of painting, and the pressure of paint flowing through a supply path and a circulation path of a paint supply apparatus, and the pressure of paint inside the painting head are kept in suitable pressure ranges.

### [Prior Art Documents]

### [Patent Documents]

[Patent Document 1] JP 7153816 B1

### [Summary of the Invention]

### [Problems to be Solved by the Invention]

The configuration disclosed in Patent Document 1 makes it possible to limit fluctuations in the pressure of paint flowing through the supply path and the circulation path of the paint supply apparatus, and fluctuations in the pressure of paint inside the print head, which may make it possible to suppress a reduction in painting quality. However, this configuration requires time in order to limit the fluctuations in the pressure of the paint, which is therefore problematic in that there is a drop in painting rate.

The present invention has been devised in light of this situation, and the objective thereof lies in providing a painting robot which is capable of improving painting productivity while also improving painting quality.

### [Means for Solving the Problems]

A painting robot according to one aspect of the present invention paints a painting area of a vehicle body, and comprises: a painting head having a plurality of nozzles for ejecting drops of paint supplied from an external supply path via an internal flow path; a robot arm which has the painting head mounted on a tip end thereof and causes the painting head to move to a desired position; and an arm control unit for controlling operation of the robot arm, the arm control unit controlling operation of the robot arm so that supply vibration for supplying the paint to the internal flow path is applied to the painting head before the painting area is painted.

### [Effects of the Invention]

The present invention makes it possible to provide a painting robot capable of improving painting productivity while also improving painting quality.

### [Brief Description of the Drawings]

[Fig. 1] Fig. 1 is a schematic configuration diagram showing a schematic configuration of a painting robot according to the embodiment.
[Fig. 2A] Fig. 2A is an enlargement of a painting head of the painting robot according to the embodiment.
[Fig. 2B] Fig. 2B is a front view showing a state in which a nozzle-forming face of the painting head shown in fig. 2A, from which paint is ejected, is seen from a front face.
[Fig. 2C] Fig. 2C is an outline configuration diagram showing an internal flow path inside the painting head shown in fig. 2A.
[Fig. 3] Fig. 3 is a flowchart showing the flow of control performed by a main control unit of the painting robot according to the embodiment.
[Fig. 4] Fig. 4 is a schematic diagram showing a situation in which the painting head of the painting robot according to the embodiment is transitioning to a painting position.
[Fig. 5] Fig. 5 is a schematic diagram showing an arrangement of multiple paths painted by the painting head of the painting robot according to the embodiment.
[Fig. 6A] Fig. 6A is a schematic diagram showing a state after the plurality of paths have been painted by a painting head of a painting robot according to a comparative example.
[Fig. 6B] Fig. 6B is a schematic diagram showing a state after the plurality of paths have been painted by the painting head of the painting robot according to the embodiment.
[Fig. 7] Fig. 7 is an enlargement of a painting head of a painting robot according to a variant example of the embodiment.
[Fig. 8] Fig. 8 is a schematic diagram showing a situation in which the painting head is transitioning to the painting position in the variant example of the painting robot according to the embodiment.

### [Embodiments of the Invention]

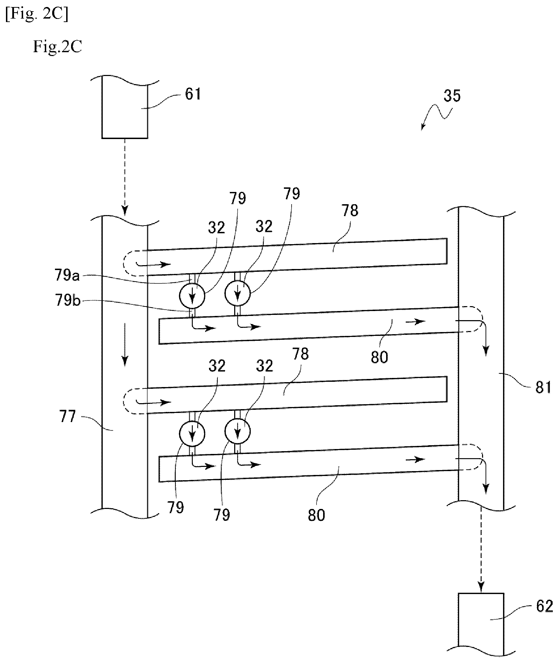

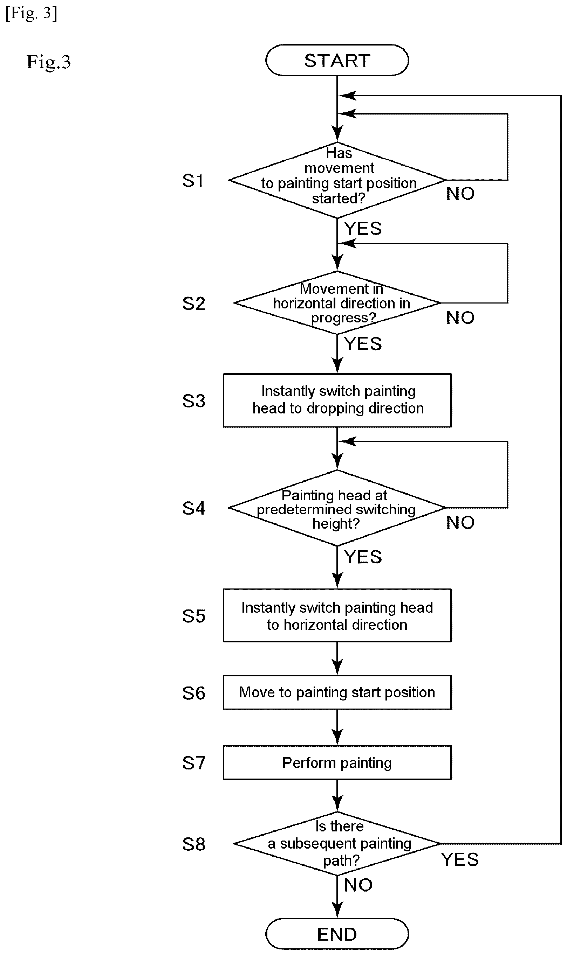

A painting robot according to the embodiment will be described below with reference to the drawings. It should be noted that XYZ coordinates are used to make directions clear in the drawings, except in fig. 2C and the flowchart of fig. 3.

### [Painting robot]

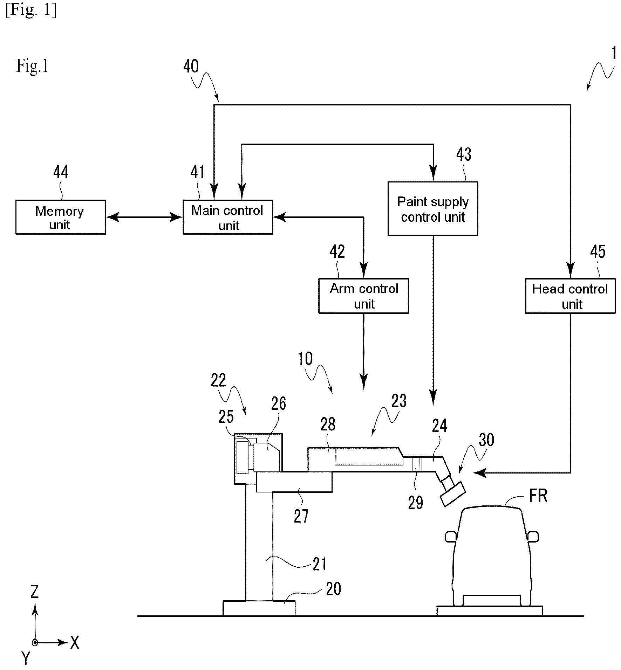

Fig. 1 is a schematic configuration diagram showing a schematic configuration of the painting robot 1 according to the embodiment. The painting robot 1 comprises a robot arm 10, a painting head 30, and a control unit 40.

The painting robot 1 is arranged in the vicinity of a painting line in an automobile production plant and paints vehicle bodies FR which are conveyed along the painting line. The vehicle body FR of an automobile is described as an example of an object being painted in the embodiment, but the object being painted may equally be an object other than the vehicle body FR of an automobile.

The painting robot 1 paints the vehicle body FR which is conveyed on the painting line from an upstream side.
In a painting process, the vehicle body FR may be painted as it moves along a painting line, or the flow of the painting line may be stopped at a predetermined position to paint the vehicle body FR. The vehicle body FR which has been painted by means of the painting robot 1 is conveyed toward a downstream side of the painting line.

The painting robot 1 is depicted, by way of example, as having a tip end portion 24 capable of pivoting in directions centred on three axes, namely an X axis, a Y axis and a Z axis, but the tip end portion 24 may pivot about any one of the X axis, Y axis and Z axis, or may pivot about two of those axes.

The painting is carried out for the purpose of forming a paint film on a surface of the object being painted, in order to protect the surface and to impart an attractive appearance. The painting process may involve simply painting using a paint having a specific colour or a paint having a specific function, but also includes successively overcoating paints having multiple colours or paints having specific functions.

### (Robot arm)

The robot arm 10 is illustrated as a multi-joint robot, but may equally be a SCARA robot, provided that it is capable of painting. As shown in fig. 1, the robot arm 10 comprises: a stand 20, a leg portion 21, a rotational drive unit 22, an arm 23, the tip end portion 24, and a painting head 30.

The stand 20 is a fixing member for fixing the robot arm 10 to a floor surface of the painting line and supporting the robot arm 10. The stand 20 may be movable over the floor surface of the painting line.

The leg portion 21 has a lower portion fixed to the stand 20 and an upper portion connected to the rotational drive unit 22, and extends to a vertical height suitable for painting to be performed by the robot arm 10.

The rotational drive unit 22 is connected to an upper end of the leg portion 21 and comprises a rotary shaft portion 25 and a rotating arm 26. The rotary shaft portion 25 causes the rotating arm 26 to rotate by means of a motor (not depicted) about a direction parallel to the floor surface (the X axis direction shown in fig. 1). The rotating arm 26 causes the arm 23 connected to the rotating arm 26 to rotate with a straight line orthogonal to the centre of rotation of the rotary shaft portion 25 (the Z axis direction shown in fig. 1) serving as a rotational centre.

The arm 23 comprises a first pivoting arm 27 and a second pivoting arm 28. The first pivoting arm 27 is connected to the rotating arm 26 at one end portion and connected to the second pivoting arm 28 at another end portion. The first pivoting arm 27 is pivoted by means of a motor (not depicted) mounted on the rotating arm 26, with the Z axis direction shown in fig. 1 serving as a centre of pivoting. The second pivoting arm 28 is connected to the first pivoting arm 27 at one end portion and has a wrist portion 29 (to be described later) at another end portion. The second pivoting arm 28 is pivoted by means of a motor (not depicted), with the Z axis direction shown in fig. 1 serving as a centre of pivoting.

The tip end portion 24 is disposed at a tip end side of the robot arm 10 and sprays the vehicle body FR of the automobile with paint. The wrist portion 29 is held between the tip end portion 24 and the second pivoting arm 28. The wrist portion 29 causes the tip end portion 24 to pivot about at least one of the three axes (X axis, Y axis and Z axis) shown in fig. 1. The tip end portion 24 comprises the painting head 30 at a tip end thereof.

### (Painting head)

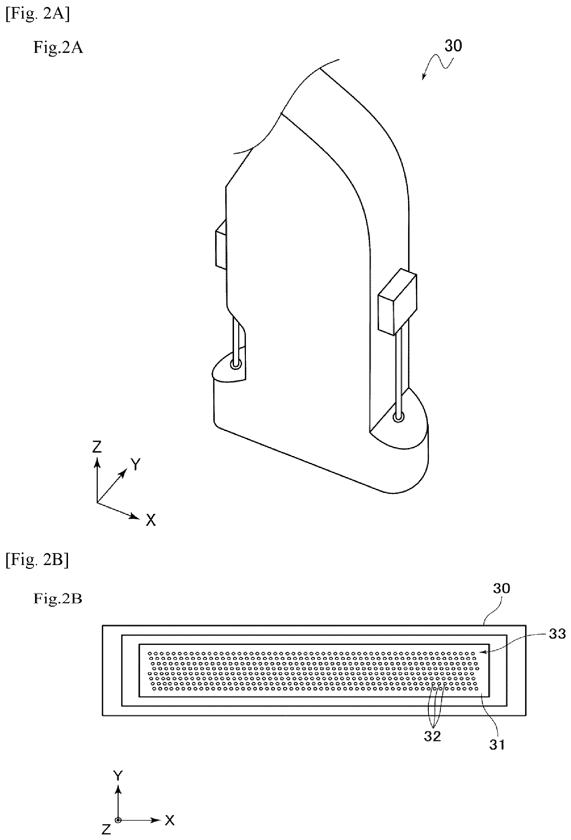

The painting head 30 will be described with reference to fig. 2A, 2B and 2C. Fig. 2A is an enlargement of the painting head 30 of the painting robot 1 according to the embodiment. Fig. 2B is a front view showing a state in which a nozzle-forming face 31 of the painting head 30 shown in fig. 2A, from which paint is ejected, is seen from a front face. Fig. 2C is an outline configuration diagram showing an internal flow path inside the painting head shown in fig. 2A.

An external supply path is laid inside the robot arm 10 or along the robot arm 10, and paint is supplied to the painting head 30 from the external supply path via an internal flow path 35 of the painting head 30. The painting head 30 comprises a plurality of nozzles 32 for ejecting drops of paint supplied from the internal flow path 35. The painting head 30 sprays the vehicle body FR moving over the painting line with paint at a suitable timing.

A plurality of nozzle rows 33 comprising multiple nozzles 32 are arranged in lines with fixed regularity on the nozzle-forming face 31. The painting head 30 forms a paint film on the vehicle body FR constituting an object being painted, by spraying paint at a suitable timing from the nozzles 32.

The internal flow path 35 disposed inside the painting head 30 will be described here.

As shown in fig. 2C, the painting head 30 comprises: a supply-side large flow path 77, row-direction supply flow paths 78, nozzle pressurization chambers 79, row-direction discharge flow paths 80, and a discharge-side large flow path 81. The supply-side large flow path 77 is a flow path through which the paint is supplied from a supply path 61. Furthermore, the row-direction supply flow paths 78 are flow paths through which the paint inside the supply-side large flow path 77 is distributed.

Furthermore, the nozzle pressurization chambers 79 are connected to the row-direction supply flow paths 78 via nozzle supply flow paths 79a. By this means, the paint is supplied from the row-direction supply flow paths 78 to the nozzle pressurization chambers 79. The nozzle pressurization chambers 79 are provided correspondingly with the number of nozzles 32, and the paint inside can be ejected from the nozzles 32 using a piezoelectric substrate which is not depicted.

Furthermore, the nozzle pressurization chambers 79 are connected to the row-direction discharge flow paths 80 via nozzle discharge flow paths 79b. The paint ejected from the nozzles 32 is therefore discharged from inside the nozzle pressurization chambers 79 to the row-direction discharge flow paths 80 via the nozzle discharge flow paths 79b. Furthermore, the row-direction discharge flow paths 80 are connected to the discharge-side large flow path 81. The discharge-side large flow path 81 is a flow path in which the paint discharged from each of the row-direction discharge flow paths 80 merges. The discharge-side large flow path 81 is connected to a return flow path 62.

By virtue of this configuration, the paint supplied from the supply path 61 is ejected from the nozzles 32 via the supply-side large flow path 77, the row-direction supply flow paths 78, the nozzle supply flow paths 79a, and the nozzle pressurization chambers 79. Furthermore, the paint which has not been ejected from the nozzles 32 is returned from the nozzle pressurization chambers 79 to the return flow path 62 via the nozzle discharge flow paths 79b, the row-direction discharge flow paths 80, and the discharge-side large flow path 81.

In this embodiment, the following control is performed to ensure that there is no lack of paint in the internal flow path 35 provided inside the painting head 30, which would lead to paint not being discharged from the nozzles 32.

### (Control unit)

Returning to fig. 1, the control unit 40 comprises: a main control unit 41, an arm control unit 42, a paint supply control unit 43, a memory unit 44, and a head control unit 45.

The main control unit 41 controls movement of the painting robot 1 and paint supply by sending signals to the arm control unit 42, the paint supply control unit 43 and the head control unit 45 on the basis of information in the memory unit 44.

The arm control unit 42 controls movement from the rotational drive unit 22 as far as the painting head 30 on the basis of signals from the main control unit 41. The arm control unit 42 causes the painting robot 1 to move to a desired painting position, and causes the painting head 30 to move in a main scanning direction during painting. The arm control unit 42 performs control to align the main scanning direction of the painting head 30 with the direction of extension of strip-shaped painting paths P so that each painting path P can be painted by reciprocating movement in order from the end portion sides thereof in an area in which painting locations are adjacently arranged as said painting paths P.

The paint supply control unit 43 performs drive control of a pump and a flow path changeover valve, etc. which are installed along a paint circulation pathway of the painting robot 30, on the basis of signals from the main control unit 41.

The head control unit 45 controls driving of the piezoelectric substrate on the basis of signals from the main control unit 41, in order for the painting head 30 to eject the paint from the nozzles 32. The piezoelectric substrate varies the amount of paint ejected from the nozzles 32 by changing a driving frequency.

The memory unit 44 stores the shape of the vehicle body FR moving over the painting line, and supplies the data which is currently required by the main control unit 41 from data which has been stored in the past, so that the painting head 30 does not interfere with the vehicle body FR. Furthermore, as the plurality of painting paths P are continuously painted, the painting paths P for which painting has already been completed are stored and the main control unit 41 is supplied with information relating to unpainted painting paths P.

### [Control flow]

The control flow of the painting robot 1 will be described next with reference to fig. 3. Fig. 3 is a flowchart showing control performed by the main control unit 41 of the painting robot 1 according to the embodiment. It should be noted that "horizontal direction" in the following description is simply used to conveniently express a direction parallel to a painting area, and "horizontal direction" does not mean a direction excluding a vertical component. This includes both completely horizontal and otherwise.

In step S1, the main control unit 41 determines whether or not the painting head 30 has started moving to a painting start position. If the painting head 30 is deemed to have started moving to the painting start position, the processing advances to step S2, while if it is deemed not to be moving, the processing of this step is repeated. The arm control unit 42 moves the painting head 30 on the basis of a command from the main control unit 41. Movement to the painting start position constitutes movement of the painting head 30 from an initial position to a position to start painting of the object being painted.

In step S2, the main control unit 41 determines whether or not the painting head 30 is moving in a horizontal direction. If the painting head 30 is deemed to be moving in the horizontal direction, the processing advances to step S3, while if the painting head 30 is not deemed to be moving in the horizontal direction, the processing of this step is repeated.

In step S3, the main control unit 41 instantly switches the painting head 30 to a dropping direction (second instant direction-switching control). The painting head 30 is moving in the horizontal direction during the processing of this step, so the painting head 30 is instantly switched from movement in the horizontal direction to movement in the dropping direction. This instant change in movement direction of the painting head 30 causes the painting head 30 to be filled with paint due to inertial force, preventing a lack of paint which would cause an insufficient amount of paint to be ejected from the nozzles 32. It should be noted that the acceleration applied to the painting head 30 is around 1.0-3.0 m/s² when the direction of movement of the painting head 30 is instantly changed.

In step S4, the main control unit 41 determines whether or not the painting head 30 has dropped to a predetermined switching height in the dropping direction. If the painting head 30 is deemed to have dropped to the predetermined switching height, the processing advances to step S5, while if the painting head 30 is not deemed to have dropped to the predetermined switching height, the processing of this step is repeated. The predetermined switching height is set to be at least equal to or greater than the height for painting of the object being painted.

In step S5, the main control unit 41 instantly switches the painting head 30 to the horizontal direction (first instant direction-switching control). The painting head 30 is moving in the dropping direction during the processing of this step, so the painting head 30 is instantly switched from movement in the dropping direction to movement in the horizontal direction. In the same way as in the processing during step S3, the painting head 30 is filled with paint due to inertial force, preventing a lack of paint which would cause an insufficient amount of paint to be ejected from the nozzles 32. It should be noted that the acceleration applied to the painting head 30 is around 1.0-3.0 m/s² when the direction of movement of the painting head 30 is instantly changed.

In step S6, the main control unit 41 causes the painting head 30 to move to the painting start position. The arm control unit 42 moves the painting head 30 on the basis of a command from the main control unit 41.

In step S7, the main control unit 41 performs painting. The painting is performed on the basis of commands from the main control unit 41 by means of movement of the painting head 30 afforded by the arm control unit 42, and control of the amount of paint discharged, afforded by the head control unit 45, while the painting head 30 is kept at a suitable angle in relation to the object being painted.

Furthermore, the painting head 30 and the paint supply control unit 43 control the amount of paint ejected from the nozzles 32 on the basis of commands from the main control unit 41 so that the painting paths P can be evenly painted from the painting start position.

In step S8, the main control unit 41 determines whether or not there is a subsequent painting path P. If there is deemed to be a subsequent painting path P, the processing advances to step S1, and the arm control unit 42 causes the painting head 30 to move to the painting start position for the subsequent painting path P. The processing terminates if there is not deemed to be a subsequent painting path P. The painting paths P will be described later.

### [Action]

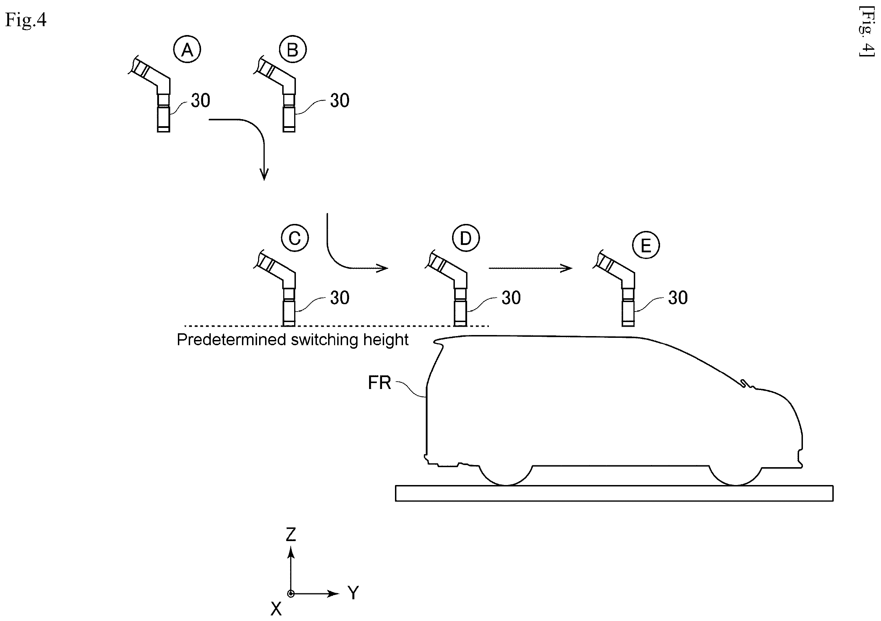

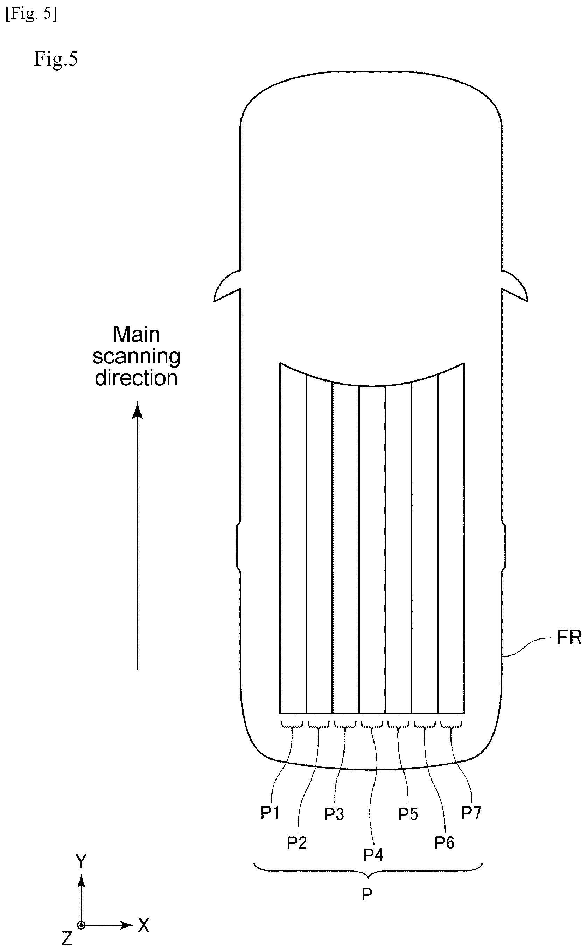

The action of the painting robot 1 according to the embodiment will be described. Fig. 4 is a schematic diagram showing a situation in which the painting head 30 of the painting robot 1 according to the embodiment is transitioning to the painting position. Fig. 5 is a schematic diagram showing an arrangement of multiple painting paths P painted by the painting head 30 of the painting robot 1 according to the embodiment. The painting paths P are pathways on which the painting head 30 ejects paint while moving.

Fig. 4 shows a state in which the vehicle body FR constituting the object being painted is seen from a transverse direction. It should be noted that, in fig. 4, the position of the painting head 30 in the height direction has been emphasised to make it easier to understand, but the actual height of the painting head 30 differs from what is shown. The arm control unit 42 first of all starts to move the painting head 30 to the painting start position in order to paint the object being painted (point A in fig. 4, YES in step S1).

Next, if the painting head 30 is deemed to be moving in the horizontal direction, the arm control unit 42 instantly changes the movement direction of the painting head 30 to the dropping direction, that is, varies the movement direction by approximately 90° (point B in fig. 4, step S3). However, the movement direction of the painting head 30 may also include a component in the horizontal direction as long as a component in the dropping direction is included, e.g., the movement direction of the painting head 30 may also be varied in a direction following a parabola.

Next, when the height of the painting head 30 reaches the predetermined switching height, the movement direction of the painting head 30 is instantly changed to the horizontal direction, i.e., the movement direction is varied by approximately 90° (point C in fig. 4, step S5).

Next, painting is performed when the painting head 30 arrives at the painting start position (point D in fig. 4, step S7).

If there is a painting path P to be subsequently painted after this painting has been completed (point E in fig. 4), the arm control unit 42 causes the painting head 30 to move to the subsequent painting path P. During this movement, the arm control unit 42 performs the first instant direction-switching control and the second instant direction-switching control in the same way as described above.

Fig. 5 shows a state in which the vehicle body FR constituting the object being painted is seen from vertically above. The painting start position shown in fig. 4 is behind the vehicle body, which is at the bottom of the page in fig. 5, and painting is performed in the main scanning direction toward the front of the vehicle at the top of the page. Fig. 5 shows seven painting paths P by way of example, but the number of painting paths P may vary according to the width of the surface of the vehicle body FR which is being painted, the width of the painting head 30, and the width of coating overlap.

The series of first instant direction-switching control and second instant direction-switching control shown in the control flow of fig. 3 is first of all performed for the painting path P1. If there is deemed to be a subsequent painting path P in step S8 of fig. 3, the arm control unit 42 causes the painting head 30 to move to the rear end of the vehicle body on the painting path P2 in order to perform the subsequent painting.

At this time, the arm control unit 42 may implement the first instant direction-switching control and the second incident direction-switching control while causing the painting head 30 to move. Furthermore, if, during movement of the painting head 30 to the rear end of the vehicle body on the painting path P2, there is a possibility of paint dripping from the nozzles 32 and adhering to another painting path P due to the first instant direction-switching control and the second instant direction-switching control, the painting head 30 may be moved to the rear end of the vehicle body without the first instant direction-switching control or the second instant direction-switching control being performed, then the first instant direction-switching control and the second instant direction-switching control may be performed during the preliminary movement when the painting head 30 moves to the painting start position for the painting path P2.

The main control unit 41 selects which method is used to perform the first instant direction-switching control and the second instant direction-switching control between the painting paths P, depending on a positional relationship of the painting head 30 and the painting path P at that time.

The first instant direction-switching control and the second instant direction-switching control may also be repeated in the same way when the painting head 30 has finished painting the painting path P2 and the arm control unit 42 causes the painting head 30 to move to the rear end of the vehicle body on the painting path P3.

By this means, the first instant direction-switching control and the second instant direction-switching control can be performed each time, not only when the painting head 30 is moving to the first painting path P1 in the painting process, but also when painting of each painting path P has been completed and the painting head 30 moves to the subsequent painting path P, which therefore enables the internal flow path 35 of the painting head 30 to be more reliably filled with paint due to the action of the large inertial force on the paint inside the nozzles 32.

It should be noted that the first instant direction-switching control and the second instant direction-switching control need not necessarily both be implemented, and only either one control may be implemented, depending on the direction of movement of the painting head 30.

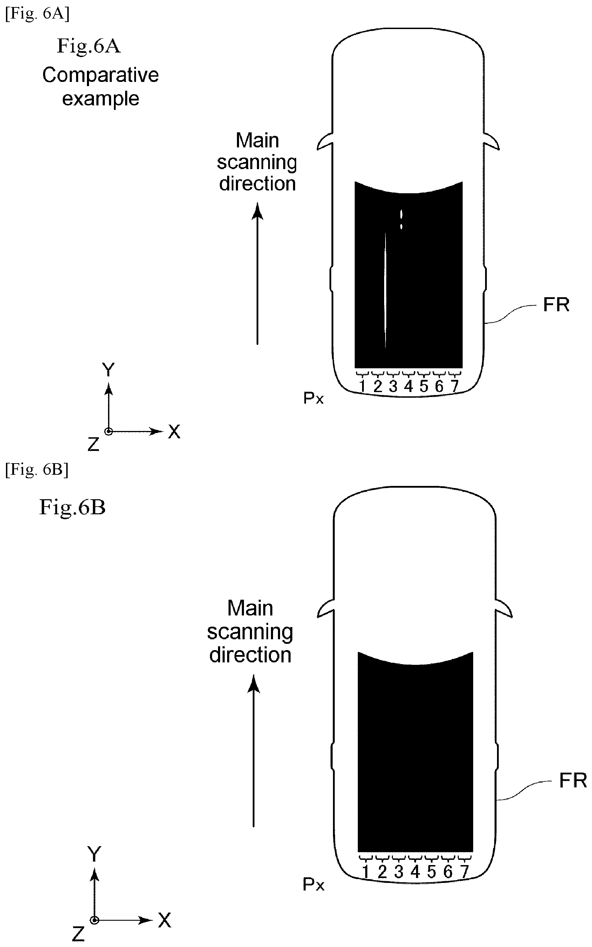

Results of painting after the painting head 30 has painted a plurality of painting paths P will be described here. Fig. 6A is a schematic diagram showing a state after the plurality of painting paths P have been painted by a painting head 30 of a painting robot 1 according to a comparative example. Fig. 6B is a schematic diagram showing a state after the plurality of painting paths P have been painted by the painting head 30 of the painting robot 1 according to the embodiment.

As shown in fig. 6A, painting gaps and/or blurring occur, depending on the painting path P, and uniform painting cannot be achieved on all of the painting paths P in the comparative example.

This is thought to be because there tends to be a lack of paint inside the internal flow path 35 of the painting head 30, and there is a lack of paint from the painting start position before one painting path P has been completely painted, so the paint ejection pressure cannot be maintained.

In contrast to this, as shown in fig. 6B, uniform painting can be achieved without unevenness on all of the painting paths P in the embodiment. Sufficient paint can be drawn into the internal flow path 35 of the painting head 30 prior to painting, by applying a large inertial force to the painting head 30, so it is considered possible to prevent a lack of paint, such as seen in the comparative example, while one painting path P is being scanned.

### [Variant Example]

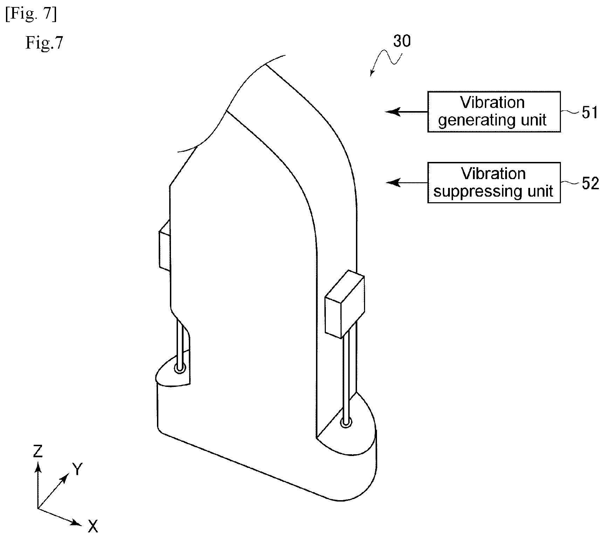

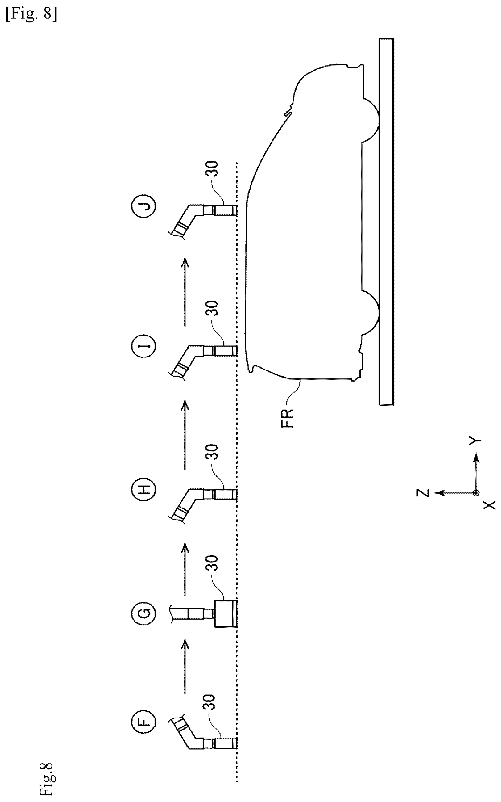

Fig. 7 is an enlargement of a painting head 30 of a painting robot 1 according to a variant example of the embodiment. Fig. 8 is a schematic diagram showing a situation in which the painting head is transitioning to the painting position in the variant example of the painting robot according to the embodiment.

### (Vibration generation/suppression)

The embodiment above described an example in which the movement direction of the painting head 30 is suddenly changed to impart a large inertial force, whereby the internal flow path 35 inside the painting head 30 is filled with paint by inertial force, thus preventing a lack of paint which would cause an insufficient amount of paint to be ejected from the nozzles 32, but vibration may equally be applied to the painting head 30 by another configuration in addition to that described above.

For example, in the embodiment above, as shown in fig. 4, the first instant direction-switching control causes the movement direction of the painting head 30 to suddenly change to the Y-axis direction, and the second instant direction-switching control causes the movement direction of the painting head 30 to suddenly change to the Z-axis direction, whereby inertial force is applied to the painting head 30, but, in addition to this, it is equally possible to perform instant direction-switching control along the X-axis direction so that inertial force is applied to the painting head 30 by causing the movement direction of the painting head 30 to suddenly change to the X-axis direction.

Furthermore, instead of or as well as causing the movement direction of the painting head 30 to suddenly change to the X-axis direction, the Y-axis direction and the Z-axis direction as described above, the arm control unit 42 may equally impart inertial force by performing rotation control so that the painting head 30 is rotated in relation to the robot arm 10 about at least one of the X axis, Y axis and Z axis, while the painting head 30 is moving from the movement start position to the painting start position for the painting area. The action of the painting head 30 when rotation control is performed will be described with reference to fig. 8.

Fig. 8 shows a state in which the vehicle body FR constituting the object being painted is seen from a transverse direction. It should be noted that, in fig. 8, the position of the painting head 30 in the height direction has been emphasised to make it easier to understand, but the actual height of the painting head 30 differs from what is shown. The arm control unit 42 first of all starts to move the painting head 30 to the painting start position in order to paint the object being painted (point F in fig. 8).

Next, the arm control unit 42 rotates the painting head 30 about the Z axis while moving the painting head 30 to a predetermined movement position (the Y-axis direction in fig. 8). The state of rotation is approximately 90° at the point G. The rotation direction of the painting head 30 is set according to the structure, etc. of the internal flow path 35 inside the painting head 30, and the rotation speed of the painting head 30 is set on the basis of the type, viscosity and temperature, etc. of the paint so that the internal flow path 35 is filled with sufficient paint, but so that the paint is not sprayed out from the nozzles by centrifugal force and caused to adhere to the vehicle body FR and other surrounding objects.

Next, when an angle of rotation of the painting head 30 about the Z axis reaches the angle for the start of painting, the arm control unit 42 stops the rotation of the painting head 30 (point H in fig. 8). After this, the arm control unit 42 fixes the angle of rotation of the painting head 30 until painting has been completed. Following this, the arm control unit 42 continues to move the painting head 30, and painting is performed when the painting head 30 arrives at the painting start position (point I in fig. 8).

If there is a painting path P to be subsequently painted after this painting has been completed (point J in fig. 8), the arm control unit 42 causes the painting head 30 to move to the subsequent painting path P. During this movement, the arm control unit 42 may perform the rotation control in the same way as described above.

It should be noted that, in this variant example, the painting head 30 was rotated about the Z axis, but it may equally be rotated about the X axis or the Y axis. Furthermore, the first instant direction-switching control and second instant direction-switching control of the embodiment, and the instant direction-switching control along the X-axis direction and rotation control of the variant example can also be performed by combining the operations above, depending on the space from the movement start position to the painting start position.

It should be noted that in all of the descriptions given above, the X-axis direction, Y-axis direction and Z-axis direction are illustrated as the orientations shown in fig. 4, but these orientations need not necessarily be as shown in fig. 4, provided that the X axis, Y axis and Z axis constitute three axes perpendicular to each other. Further, the movement and rotation of the painting head 30 need not be movement exactly in a direction along the X axis, Y axis or Z axis, or rotation centred exactly on those axes, and the movement direction may be a direction forming a certain angle with each axis, or the rotational axis may be a direction forming a certain angle with each axis.

Furthermore, as shown in fig. 7, the head control unit 45 may comprise: a vibration generating unit 51 for applying vibration to the painting head 30; and a vibration suppressing unit 52 for suppressing vibration of the painting head 30.

The vibration generating unit 51 is, for example, an eccentric motor or a linear vibrator which excites the painting head 30 while the arm control unit 42 is conveying the painting head 30 to the painting start position. There is a drop in painting quality if the painting head 30 vibrates during painting, so the painting head 30 is excited only during conveyance, while the painting head 30 is not in the process of painting. Furthermore, to take account of fluctuations in the pressure of the paint inside the flow path between excitation stopping and painting being started, the frequency of vibration is set at a value within a range in which the pressure fluctuations rapidly fall.

This makes it possible for the internal flow path 35 of the painting head 30 to be filled with paint, while also allowing old paint remaining in the nozzles 32 inside the painting head 30 to be discharged from the nozzles 32 so that new paint can flow into the nozzles 32.

Furthermore, the vibration suppressing unit 52 is, for example, a gyroscope, etc. which suppresses the vibration constantly produced by a drive motor (not depicted) of the arm control unit 42 while the arm control unit 42 is conveying the painting head 30 to the painting start position. The painting head 30 hardly vibrates while the vibration suppressing unit 52 is operating, and the painting head 30 is excited by means of the drive motor, etc. while the vibration suppressing unit 52 is not operating. Utilizing this action enables a switch, at an appropriate timing, between a state in which vibration is suppressed and a state in which the suppression is stopped, and vibration can be applied to the painting head 30 as a result. In this case also, there is a drop in painting quality if the painting head 30 vibrates during painting, so the painting head 30 is excited only during conveyance, while the painting head 30 is not in the process of painting. Furthermore, to take account of fluctuations in the pressure of the paint inside the flow path between excitation stopping and painting being started, the frequency of vibration is set at a value within a range in which the pressure fluctuations rapidly fall.

This makes it possible for the internal flow path 35 of the painting head 30 to be filled with paint, while also allowing old paint remaining in the nozzles 32 inside the painting head 30 to be discharged from the nozzles 32 so that new paint can flow into the nozzles 32.

### [Supplementary Description of Embodiments]

The embodiments described above all merely illustrate preferred specific examples of the present invention. The numerical values, components, and arrangement locations and ordering of connection configurations of the components, etc. which are given in the embodiments above are merely examples and are not intended to limit the present invention. Furthermore, the drawings are not necessarily strict depictions.

Embodiments of the present invention were described above, but those embodiments merely illustrate some examples of application of the present invention, and are not intended to limit the technical scope of the present invention to the specific configurations of the embodiments.

### [Additional Notes]

Details of the disclosure of the several embodiments described above will be understood as follows, for example.

### (1) Paint supply vibration

A painting robot 1 paints a painting area of a vehicle body FR, and comprises: a painting head 30 having a plurality of nozzles 32 for ejecting drops of paint supplied from an external supply path via an internal flow path 35; a robot arm 10 which has the painting head 30 mounted on a tip end thereof and causes the painting head 30 to move to a desired position; and an arm control unit 42 for controlling operation of the robot arm 10, the arm control unit 42 controlling operation of the robot arm 10 so that supply vibration for supplying the paint to the internal flow path 35 is applied to the painting head 30 before the painting area is painted.

By this means, supply vibration is applied to the painting head 30 by means of control by the arm control unit 42, thereby enabling the internal flow path 35 of the painting head 30 to be filled with paint, so it is possible to prevent a drop in painting quality, such as painting gaps and blurring caused by an insufficient supply of paint to the internal flow path 35.

Furthermore, no time is needed to limit pressure fluctuations inside the flow path, so it is possible to improve painting productivity.

### (2) First instant direction-switching

Furthermore, while the painting head 30 is moving from the movement start position to the painting start position for the painting area, the arm control unit 42 may apply the supply vibration by performing the first instant direction-switching control in which, after the movement direction of the painting head 30 has been set in the dropping direction, the movement direction is instantly switched to the parallel direction parallel to the painting area.

By this means, the arm control unit 42 may apply the supply vibration, which causes a large inertial force to act on the painting head 30 when the movement direction is switched, by performing the first instant direction-switching control in which the movement direction of the painting head 30 is instantly switched from the dropping direction to the parallel direction parallel to the vehicle body FR. Paint can therefore be supplied to parts of the internal flow path 35 of the painting head 30 which are not sufficiently filled with paint.

### (3) Second instant direction-switching

Furthermore, while the painting head 30 is moving from the movement start position to the painting start position for the painting area, the arm control unit 42 may apply the supply vibration by performing the second instant direction-switching control in which, after the movement direction of the painting head 30 has been set in the initial movement direction directed above the painting area, the movement direction is instantly switched to the dropping direction.

By this means, the arm control unit 42 performs the second instant direction-switching control in which, after the movement direction of the painting head 30 has been set in the initial movement direction, the movement direction is instantly switched to the dropping direction, whereby the supply vibration which causes a large inertial force to act is applied to the painting head 30 by switching the movement direction twice. Paint can therefore be supplied to parts of the internal flow path 35 of the painting head 30 which are not sufficiently filled with paint.

### (4) Painting paths

Furthermore, the arm control unit 42 may apply the supply vibration for each painting path P constituting a pathway on which the paint is ejected while the painting head 30 is moving in relation to the painting area.

By this means, the supply vibration is applied to the painting head 30 for each painting path P by the arm control unit 42. The internal flow path 35 can therefore be filled with paint beforehand, whichever painting path P is being painted. It is therefore possible to prevent a drop in painting quality such as painting gaps and blurring caused by an insufficient supply of paint to the internal flow path 35 on all of the painting paths P.

### (5) Vibration generating means

Furthermore, the painting robot 1 may comprise the vibration generating unit 51 for applying the supply vibration to the painting head 30, and the arm control unit 42 may control operation of the vibration generating unit 51 so as to apply the supply vibration to the painting head 30 while the painting head 30 is moving from the movement start position to the painting start position for the painting area.

By this means, the vibration generating unit 51 is provided, and the supply vibration is applied to the painting head 30 by the vibration generating unit 51, which makes it possible for the internal flow path 35 of the painting head 30 to be filled with paint. It is therefore possible to prevent a drop in painting quality such as painting gaps and blurring caused by an insufficient supply of paint to the internal flow path 35.

Furthermore, no time is needed to limit pressure fluctuations, so it is possible to improve painting productivity.

Furthermore, vibration is applied directly to the painting head 30 by the vibration generating unit 51, in addition to the instant direction-switching control of the painting head 30, which thereby enables the nozzles 32 to be filled with paint, as well as the internal flow path 35, and a further drop in painting quality can be prevented.

### (6) Vibration suppressing means

Furthermore, the painting robot 1 may comprise the vibration suppressing unit 52 for suppressing the vibration which is applied to the painting head 30 by operation of the robot arm 10, and the arm control unit 42 may control operation or operating shut-off of the vibration suppressing unit 52 so that the supply vibration is applied to the painting head 30 while the painting head 30 is moving from the movement start position to the painting start position for the painting area.

By this means, the vibration suppressing unit 52 is provided, and operation or operating shut-off of the vibration suppressing unit 52 is controlled so that the supply vibration can be applied to the painting head 30, which makes it possible for the internal flow path 35 of the painting head 30 to be filled with paint. It is therefore possible to prevent a drop in painting quality such as painting gaps and blurring caused by an insufficient supply of paint to the internal flow path 35.

Furthermore, no time is needed to limit pressure fluctuations, so it is possible to improve painting productivity.

Furthermore, vibration control of the painting head 30 is switched between operational and operating shut-off, in addition to the instant direction-switching control of the painting head 30, which thereby enables the nozzles 32 to be filled with paint, as well as the internal flow path 35, and a further drop in painting quality can be prevented.

### (7) Rotation control

Furthermore, while the painting head is moving from the movement start position to the painting start position for the painting area, the arm control unit may apply the supply vibration by performing rotation control to rotate the painting head 30 in relation to the robot arm 10.

By this means, the arm control unit 42 can cause centrifugal force to act on the painting head 30 by performing the rotation control to rotate the painting head 30 in relation to the robot arm 10. A sufficient amount of paint can therefore be supplied to parts of the internal flow path 35 of the painting head 30 which are not sufficiently filled with paint.

### [Key to Symbols]

- 1: Painting robot
- 10: Robot arm
- 30: Painting head
- 35: Internal flow path
- 32: Nozzle
- 42: Arm control unit
- 51: Vibration generating unit
- 52: Vibration suppressing unit
- FR: Vehicle body
- P: Painting path

## Claims

1. Painting robot for painting a painting area of a vehicle body, the painting robot comprising:
a painting head having a plurality of nozzles for ejecting drops of paint supplied from an external supply path via an internal flow path;
a robot arm which has the painting head mounted on a tip end thereof and causes the painting head to move to a desired position; and
an arm control unit for controlling operation of the robot arm,
**characterized in that**
the arm control unit controls operation of the robot arm so that supply vibration for supplying the paint to the internal flow path is applied to the painting head before the painting area is painted.

2. Painting robot according to Claim 1, **characterized in that**,
while the painting head is moving from a movement start position to a painting start position for the painting area, the arm control unit
applies the supply vibration by performing first instant direction-switching control in which, after a movement direction of the painting head has been set in a dropping direction, the movement direction is instantly switched to a parallel direction parallel to the painting area.

3. Painting robot according to Claim 2, **characterized in that**,
while the painting head is moving from the movement start position to the painting start position for the painting area, the arm control unit applies the supply vibration by performing second instant direction-switching control in which, after the movement direction of the painting head has been set in an initial movement direction directed above the painting area, the movement direction is instantly switched to the dropping direction.

4. Painting robot according to any one of Claims 1 to 3,
**characterized in that**
the arm control unit applies the supply vibration for each painting path constituting a pathway on which the paint is ejected while the painting head is moving in relation to the painting area.

5. Painting robot according to any of Claims 1 to 4, **characterized in that**
a vibration generating unit for imparting the supply vibration is provided in the painting head, and
while the painting head is moving from the movement start position to the painting start position for the painting area, the arm control unit controls operation of the vibration generating unit so as to apply the supply vibration to the painting head.

6. Painting robot according to any of Claims 1 to 5, **characterized in that**
the painting robot comprises a vibration suppressing unit for suppressing the vibration which is applied to the painting head by operation of the robot arm, and
while the painting head is moving from the movement start position to the painting start position for the painting area, the arm control unit controls operation or operating shut-off of the vibration suppressing unit so that the supply vibration is applied to the painting head.

7. Painting robot according to any of Claims 1 to 6, **characterized in that**,
while the painting head is moving from a movement start position to a painting start position for the painting area, the arm control unit
applies the supply vibration by performing rotation control to rotate the painting head in relation to the robot arm.
